# EUROPEAN PATENT APPLICATION

(11) **EP 4 583 024 A1**
(43) Date of publication of application: **09.07.2025**
(21) Application number: 24223304.7
(22) Date of filing: 26.12.2024
(51) Int. Cl.: G06Q 10/0637, G06Q 30/0202, G06N 3/02

(54) **SYSTEMS AND METHODS FOR OPTIMIZING PRODUCT REVENUE**

(30) Priority: 03.01.2024 IN 202421000423
(71) Applicant: Tata Consultancy Services Limited, Mumbai, Maharashtra 400 021 (IN)
(72) Inventor: KULKARNI, DEVADATTA MADHUKAR, Rochester Hills, MI 48307 (US); SRINIVASAN, RAMAKRISHNAN SUNDARAM, Mason, OH 45040 (US); TEW, JEFFREY DAVID, Rochester, MI 48306 (US)
(74) Representative: Goddar, Heinz J.

(57) **Abstract**

Growing revenue and market to meet dynamic demand mix while managing complexity are major challenges to manufacturers. Building a right product mix that effectively manages supply and production cost without losing demand is therefore very imperative for offering to customers. Conventionally available tools and approaches only address particular parts of the whole problem in disconnected fashion, and these take too long to run. Embodiments of the present disclosure provide systems and methods for optimizing product revenue by setting up problems, model revenue drivers, configuring relevant scenarios including decision inputs like relevant data, constraints, or business rules to establish a total target revenue and analyze resulting outputs with iterative improvements towards the target value for product models.

## Description

### CROSS-REFERENCE TO RELATED APPLICATIONS AND PRIORITY

The present application claims priority to Indian application no. 202421000423, filed on January 3, 2024.

### TECHNICAL FIELD

The disclosure herein generally relates to optimization techniques, and, more particularly, to systems and methods for optimizing product revenue.

### BACKGROUND

Growing revenue and market to meet dynamic demand mix while managing complexity are major challenges to manufacturers. Offering right products for relevant customer at an appropriate price is one of the key aspects for driving revenue growth. It is important to build a right product mix that effectively manages supply and production cost without losing demand. Delivering best offering mix in market starts from planning production with robust sales forecast and configurations. Dynamic pricing and incentives for offerings enhance profits, effectively addressing demand or inventory risks. The decisions made are based on team experience and there is a lack of data-driven tools to augment this decision making. Conventionally available tools and approaches only address particular parts of the whole problem in disconnected fashion, and these take too long to run.

### SUMMARY

Embodiments of the present disclosure present technological improvements as solutions to one or more of the above-mentioned technical problems recognized by the inventors in conventional systems.

For example, in one aspect, there is provided a processor implemented method for optimizing product revenue. The method comprises receiving, via one or more hardware processors, a product family comprising one or more product models, from a user, wherein each product model amongst the one or more product models comprises a plurality of feature families, wherein each feature family amongst the plurality of feature families comprises a plurality of feature variants; generating, via the one or more hardware processors, one or more configurations for each of the one or more product models, from (i) the plurality of feature variants, (ii) one or more supply constraints, and (iii) one or more usage policies, wherein each of the one or more configurations pertains to a unique bundle of the plurality of feature variants; extracting, via the one or more hardware processors, a historical sales data pertaining to the one or more configurations of each of the one or more product models; predicting, by using one or more forecasting models via the one or more hardware processors, a best-selling product configuration mix from the one or more configurations, across the one or more product models and a plurality of feature families based on the historical sales data, wherein the best-selling configuration mix comprises a plurality of product-feature variant bundles; creating, via the one or more hardware processors, one or more scenarios for the best-selling product configuration mix, through a configurator interface comprising of a plurality of options, wherein the plurality of options comprises a scenario objective, one or more scenario dimensions, and one or more scenario levels; obtaining, via the one or more hardware processors, one or more datasets pertaining to each of the one or more scenarios, wherein the one or more datasets are created for each scenario configuration, using (i) the plurality of product-feature variant bundles of the best-selling product configuration mix, (ii) one or more supply constraints, and (iii) the one or more usage policies, and wherein the one or more datasets created for each scenario comprises one or more lane-costs, the one or more supply constraints, and the one or more usage policies; optimizing, by using the one or more created datasets via the one or more hardware processors, the one or more scenarios selected based on a selected business scenario type by using an objective function, and generating a plurality of optimization values, wherein the plurality of optimization values comprises an optimal value, a range of optimality, and a shadow price, for the selected business scenario type; estimating, by using an autoregressive neural network model via the one or more hardware processors, a final target value for the one or more product models based on a first set of inputs and a second set of inputs, wherein the first set of inputs comprise a historic target value pertaining to the one or more scenarios of the one or more product models, and wherein the second set of inputs comprises at least one of a price, and an interest rate associated with one or more products; and selecting at least one scenario amongst the one or more scenarios as a focal scenario based on a comparison between an associated scenario objective value and the final target value.

In an embodiment, two or more combinations of the plurality of feature variants are used to build the one or more configurations.

In an embodiment, the step of creating the one or more scenarios comprises: selecting a scenario objective from a predefined scenario objective list; selecting one or more scenario dimensions from a predefined scenario dimensions list; selecting one or more scenario levels from a predefined scenario levels list, wherein each of the one or more scenario dimensions comprises the one or more scenario levels; and creating the one or more scenarios based on one or more combinations of the one or more scenario levels.

In an embodiment, the one or more lane-costs comprise a source representing the one or more product models, a destination representing an entity representing the one or more configurations, a category representing a product family, one or more decision variables for optimization of number of product variants to be built representing supply quantities for each source-destination-entity combination, and a coefficient representing a unit revenue used in defining an objective function.

In an embodiment, when a difference between the associated scenario objective value and the final target value is within a predefined tolerance, the focal scenario is recommended to enable one or more actions.

In an embodiment, when a difference between the associated scenario objective value and the final target value is exceeding a predefined tolerance, the method further comprises: identifying one or more deviations, by comparing one or more selected plurality of options and one or more constraints of the focal scenario with the plurality of options and the constraints of a base scenario; and iteratively modifying the one or more constraints of the focal scenario, to improve the associated scenario objective value, till the one or more deviations of the associated scenario objective value in comparison to the estimated final target value is within the predefined tolerance.

In another aspect, there is provided a processor implemented system for optimizing product revenue. The system comprises: a memory storing instructions; one or more communication interfaces; and one or more hardware processors coupled to the memory via the one or more communication interfaces, wherein the one or more hardware processors are configured by the instructions to: receive a product family comprising one or more product models, from a user, wherein each product model amongst the one or more product models comprises a plurality of feature families, wherein each feature family amongst the plurality of feature families comprises a plurality of feature variants; generate one or more configurations for each of the one or more product models, from (i) the plurality of feature variants, (ii) one or more supply constraints, and (iii) one or more usage policies, wherein each of the one or more configurations pertains to a unique bundle of the plurality of feature variants; extract a historical sales data pertaining to the one or more configurations of each of the one or more product models; predict, by using one or more forecasting models, a best-selling product configuration mix from the one or more configurations, across the one or more product models and a plurality of feature families based on the historical sales data, wherein the best-selling configuration mix comprises a plurality of product-feature variant bundles; create one or more scenarios for the best-selling product configuration mix, through a configurator interface comprising of a plurality of options, wherein the plurality of options comprises a scenario objective, one or more scenario dimensions, and one or more scenario levels; obtain one or more datasets pertaining to each of the one or more scenarios, wherein the one or more datasets are created for each scenario configuration, using (i) the plurality of product-feature variant bundles of the best-selling product configuration mix, (ii) one or more supply constraints, and (iii) the one or more usage policies, and wherein the one or more datasets created for each scenario comprises one or more lane-costs, the one or more supply constraints, and the one or more usage policies; optimize, by using the one or more created datasets via the one or more hardware processors, the one or more scenarios selected based on a selected business scenario type by using an objective function, and generate a plurality of optimization values, wherein the plurality of optimization values comprises an optimal value, a range of optimality, and a shadow price, for the selected business scenario type; estimate, by using an autoregressive neural network model, a final target value for the one or more product models based on a first set of inputs and a second set of inputs, wherein the first set of inputs comprise a historic target value pertaining to the one or more scenarios of the one or more product models, and wherein the second set of inputs comprises at least one of a price, and an interest rate associated with one or more products; and select at least one scenario amongst the one or more scenarios as a focal scenario based on a comparison between an associated scenario objective value and the final target value.

In an embodiment, two or more combinations of the plurality of feature variants are used to build the one or more configurations.

In an embodiment, the one or more scenarios are created by selecting a scenario objective from a predefined scenario objective list; selecting one or more scenario dimensions from a predefined scenario dimensions list; selecting one or more scenario levels from a predefined scenario levels list, wherein each of the one or more scenario dimensions comprises the one or more scenario levels; and creating the one or more scenarios based on one or more combinations of the one or more scenario levels.

In an embodiment, the one or more lane-costs comprise a source representing the one or more product models, a destination representing an entity representing the one or more configurations, a category representing a product family, one or more decision variables for optimization of number of product variants to be built representing supply quantities for each source-destination-entity combination, and a coefficient representing a unit reserve used in defining an objective function.

In an embodiment, when a difference between the associated scenario objective value and the final target value is within a predefined tolerance, the focal scenario is recommended to enable one or more actions.

In an embodiment, when a difference between the associated scenario objective value and the final target value is exceeding a predefined tolerance, the one or more hardware processors are further configured by the instructions to: identify one or more deviations, by comparing one or more selected plurality of options and one or more constraints of the focal scenario with the plurality of options and the constraints of a base scenario; and iteratively modify the one or more constraints of the focal scenario, to improve the associated scenario objective value, till the one or more deviations of the associated scenario objective value in comparison to the estimated final target value is within the predefined tolerance. The pre-defined tolerance refers to an acceptable range with reference to the final target revenue value, typically around 10% of the target value. Total revenue for the Base scenario generally is slightly higher than the target revenue, since it comprises an ideal scenario that is used to provide a reference point. One of the initial scenarios (other than Base) may be selected for recommendation or further refinement. This selection is rule-driven, where the rule may comprise "Select the scenario with the least total revenue difference with respect to the target revenue." The selected scenario is usually called the focal scenario. If the focal scenario's total revenue is more than the target revenue, no further refinement may be needed. The system 100 may recommend this as the preferred scenario to the decision makers. If the focal scenario's total revenue is less than the target revenue and the pre-defined tolerance (e.g., say less than 90% of the target revenue value where the predefined tolerance is 10%), further refinement may be needed. This process may be repeated till the target revenue is reached or the maximum number of iterations are run.

In yet another aspect, there are provided one or more non-transitory machine-readable information storage mediums comprising one or more instructions which when executed by one or more hardware processors cause optimizing product revenue by receiving a product family comprising one or more product models, from a user, wherein each product model amongst the one or more product models comprises a plurality of feature families, wherein each feature family amongst the plurality of feature families comprises a plurality of feature variants; generating one or more configurations for each of the one or more product models, from (i) the plurality of feature variants, (ii) one or more supply constraints, and (iii) one or more usage policies, wherein each of the one or more configurations pertains to a unique bundle of the plurality of feature variants; extracting a historical sales data pertaining to the one or more configurations of each of the one or more product models; predicting, by using one or more forecasting models, a best-selling product configuration mix from the one or more configurations, across the one or more product models and a plurality of feature families based on the historical sales data, wherein the best-selling configuration mix comprises a plurality of product-feature variant bundles; creating one or more scenarios for the best-selling product configuration mix, through a configurator interface comprising of a plurality of options, wherein the plurality of options comprises a scenario objective, one or more scenario dimensions, and one or more scenario levels; obtaining one or more datasets pertaining to each of the one or more scenarios, wherein the one or more datasets are created for each scenario configuration, using (i) the plurality of product-feature variant bundles of the best-selling product configuration mix, (ii) one or more supply constraints, and (iii) the one or more usage policies, and wherein the one or more datasets created for each scenario comprises one or more lane-costs, the one or more supply constraints, and the one or more usage policies; optimizing, by using the one or more created datasets, the one or more scenarios selected based on a selected business scenario type by using an objective function, and generating a plurality of optimization values, wherein the plurality of optimization values comprises an optimal value, a range of optimality, and a shadow price, for the selected business scenario type; estimating, by using an autoregressive neural network model, a final target value for the one or more product models based on a first set of inputs and a second set of inputs, wherein the first set of inputs comprise a historic target value pertaining to the one or more scenarios of the one or more product models, and wherein the second set of inputs comprises at least one of a price, and an interest rate associated with one or more products; and selecting at least one scenario amongst the one or more scenarios as a focal scenario based on a comparison between an associated scenario objective value and the final target value.

In an embodiment, two or more combinations of the plurality of feature variants are used to build the one or more configurations.

In an embodiment, the step of creating the one or more scenarios comprises: selecting a scenario objective from a predefined scenario objective list; selecting one or more scenario dimensions from a predefined scenario dimensions list; selecting one or more scenario levels from a predefined scenario levels list, wherein each of the one or more scenario dimensions comprises the one or more scenario levels; and creating the one or more scenarios based on one or more combinations of the one or more scenario levels.

In an embodiment, the one or more lane-costs comprise a source representing the one or more product models, a destination representing an entity representing the one or more configurations, a category representing a product family, one or more decision variables for optimization of number of product variants to be built representing supply quantities for each source-destination-entity combination, and a coefficient representing a unit revenue used in defining an objective function.

In an embodiment, when a difference between the associated scenario objective value and the final target value is within a predefined tolerance, the focal scenario is recommended to enable one or more actions.

In an embodiment, when a difference between the associated scenario objective value and the final target value is exceeding a predefined tolerance, the method further comprises: identifying one or more deviations, by comparing one or more selected plurality of options and one or more constraints of the focal scenario with the plurality of options and the constraints of a base scenario; and iteratively modifying the one or more constraints of the focal scenario, to improve the associated scenario objective value, till the one or more deviations of the associated scenario objective value in comparison to the estimated final target value is within the predefined tolerance.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 depicts an exemplary system for optimizing product revenue, in accordance with an embodiment of the present disclosure.
FIG. 2 depicts an exemplary high level block diagram of the system of FIG. 1 for optimizing product revenue, in accordance with an embodiment of the present disclosure.
FIG. 3A and FIG. 3B depict an exemplary flow chart illustrating a method for optimizing product revenue, using the systems of FIGS. 1-2, in accordance with an embodiment of the present disclosure.
FIG. 4 depicts a problem setup by the systems of FIGS. 1-2 for optimizing product revenue, in accordance with an embodiment of the present disclosure.
FIG. 5 depicts a product structure hierarchy illustrating a product family having one or more product models, in accordance with an embodiment of the present disclosure.
FIG. 6A and FIG. 6B show an example driver model at the product family level as implemented by the systems of FIGS. 1-2, in accordance with an embodiment of the present disclosure.
FIG. 7 depicts a configuration or creation of one or more scenarios by the systems of FIGS. 1-2, in accordance with an embodiment of the present disclosure.
FIG. 8 depicts a hierarchy of various linked scenarios by the systems of FIGS. 1-2, in accordance with an embodiment of the present disclosure.
FIG. 9 depicts a graphical representation illustrating a sensitivity chart output by the systems of FIGS. 1-2, in accordance with an embodiment of the present disclosure.
FIG. 10 depicts an architecture of an autoregressive neural network model (NNARX) as implemented by the systems of FIGS. 1-2 illustrating a method for estimating a final target value for one or more product models, in accordance with an embodiment of the present disclosure.
FIG. 11 depicts a flow diagram of an iterative target revenue seeker as implemented by the systems of FIGS. 1-2 for selecting at least one scenario as a focal scenario amongst one or more scenarios, in accordance with an embodiment of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Growing revenue and market to meet dynamic demand mix while managing complexity are major challenges to manufacturers. Offering right products for relevant customer at an appropriate price is one of the key aspects for driving revenue growth. Build a right product mix that effectively manages supply and production cost without losing demand is therefore very imperative. Planning production with robust sales forecast and configurations enables delivering best offering mix in market. Dynamic pricing and incentives for offerings enhance profits, effectively addressing demand or inventory risks. The decisions made are based on team experience and there is a lack of data-driven tools to augment this decision making. Conventionally available tools and approaches only address particular parts of the whole problem in disconnected fashion, and these take too long to run.

Maximizing revenue is a key concern for most manufacturers. Embodiments of the present disclosure provide systems and methods for optimizing product revenue. The systems and method enable setting up problems, model revenue drivers, configuring relevant scenarios including decision inputs like relevant data, constraints, or business rules to establish a total target revenue and analyze resulting outputs with iterative improvements towards the target. The systems and methods of the present disclosure are particularly geared towards configurable products, where a well-defined product structure hierarchy exists. For instance, a product family (e.g., say product family 1) may comprise one or more product models (e.g., product model 1, product model 2, and so on). Each product model comprises one or more feature families (e.g., say feature family 1, feature family 2, and so on.) Each feature family comprises one or more feature variants (e.g., say feature family 1 comprises a feature variant 11, feature variant 12, and the like, and feature family 2 comprises a feature variant 21, feature variant 22, and the like). The product family additionally may include one or more configurations (e.g., say configuration c1 (11/21), configuration c4 (12/21), configuration c3 (11/22), configuration c4 (12/22), and so on.). In other words, product family may comprise one or more product models, wherein each product model consists of feature families, which in turn consist of feature variants. Different combinations of feature variants are used to build various configurations. The feature variants can be shared between product models, and each manufacturer may have several such product families.

Problems may be setup wherein demands for different product models (or product families) may exist at different plants, such as Plant A, Plant B, etc. The configurations for each product model (family) are built from feature variants subject to supply constraints and usage policies, which serve as additional inputs. To solve the above problem, the system comprises (i) a product revenue drivers analyzer that analyzes the revenue drivers from product, market and external factors and the impact of drivers on product mix (also referred to as 'mix' and interchangeably used herein), (ii) a product features bundler predictor that analyzes and predicts groups of feature variants, pricing and market attributes dominating sold or preferred configuration trends for production mix, (iii) a target product mix optimizer which develops and analyzes production mix plan with target product configuration mix in alignment with the product sales trend and prediction; and (iv) a product mix revenue analyzer that analyzes sensitivity of optimal production mix for target sales and revenue using relevant scenarios based upon business, supply and usage constraints.

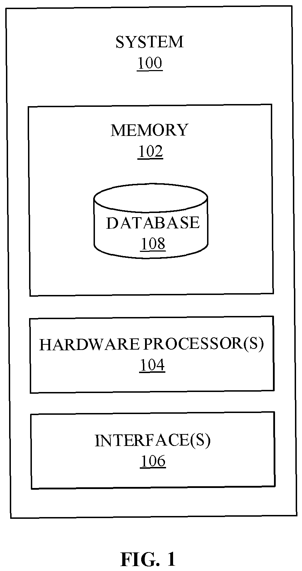

Referring now to the drawings, and more particularly to FIGS. 1 through 11, where similar reference characters denote corresponding features consistently throughout the figures, there are shown preferred embodiments and these embodiments are described in the context of the following exemplary system and/or method.

FIG. 1 depicts an exemplary system 100 for optimizing product revenue, in accordance with an embodiment of the present disclosure. In an embodiment, the system 100 may also be referred to as `optimizer', or `product revenue optimizer', or `product revenue optimization system' or 'optimization system', and interchangeably used herein. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

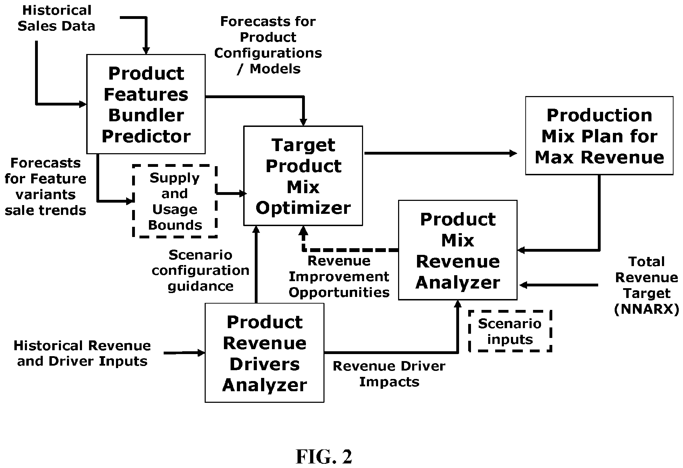

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to historical sales data of various products and so on. The information additionally comprises but is not limited to, product family, product models, a plurality of feature families associated with of the product models, feature variants of each feature family, and the like. The database 108 further comprises one or more configurations generated for each product model, best-selling product configuration mix(s), datasets that are created using (i) the plurality of product-feature variant bundles of the best-selling product configuration mix, (ii) one or more supply constraints, and (iii) the one or more usage policies, and the like. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis. FIG. 2, with reference to FIG. 1, depicts an exemplary high level block diagram of the system 100 of FIG. 1 for optimizing product revenue, in accordance with an embodiment of the present disclosure.

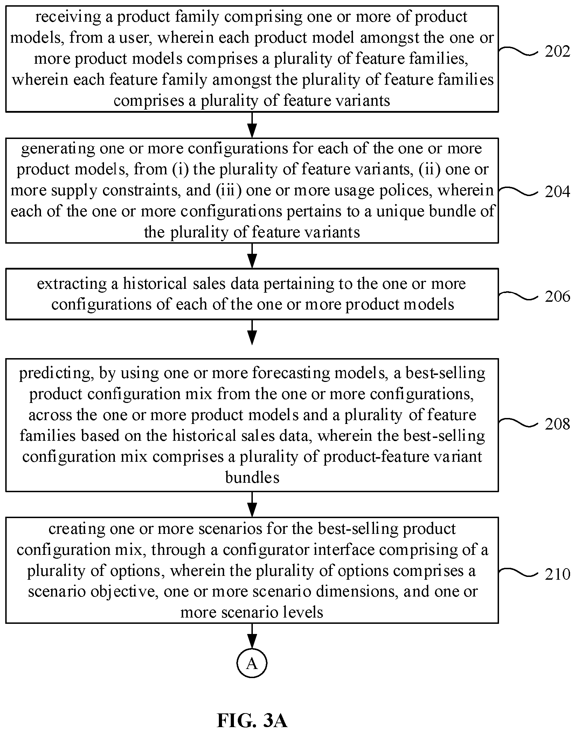

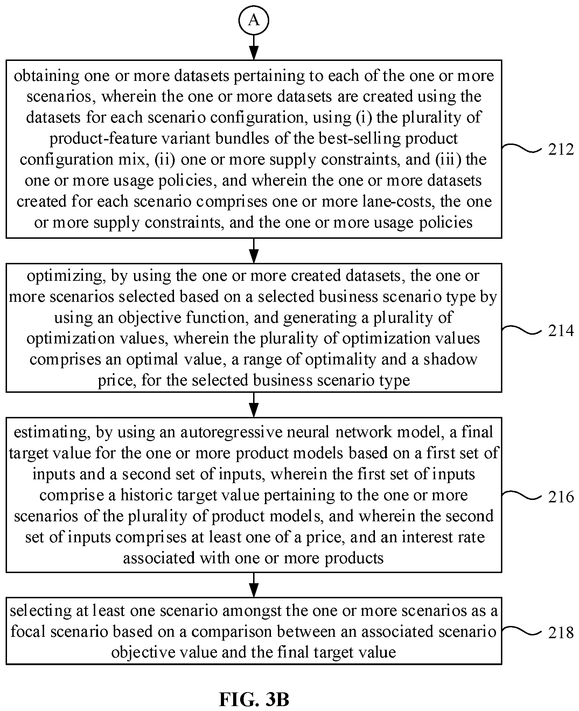

FIG. 3A and FIG. 3B, with reference to FIGS. 1-2, depict an exemplary flow chart illustrating a method for optimizing product revenue, using the systems 100 of FIGS. 1-2, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIGS. 1-2, and the flow diagram as depicted in FIGS. 3A-3B. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

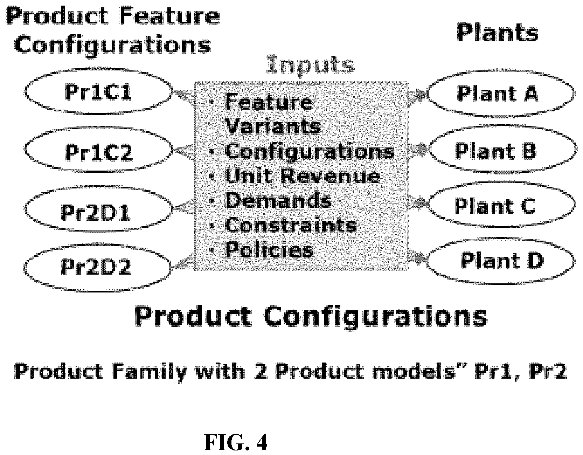

At step 202 of the method of the present disclosure, the one or more hardware processors 104 receive an input comprising a product family comprising one or more product models, from a user. Each product model amongst the one or more product models comprises a plurality of feature families. Each feature family amongst the plurality of feature families comprises a plurality of feature variants. Prior to step 202, the problem to be solved may be setup by the system 100, wherein demands for different product models (or product families) may exist at different plants, such as Plant A, Plant B, etc. The configurations for each product model (family) are built from feature variants subject to supply constraints and usage policies, which serve as additional inputs. FIG. 4, with reference to FIGS. 1 through 3B, depicts a problem setup by the systems 100 of FIGS. 1-2 for optimizing product revenue, in accordance with an embodiment of the present disclosure.

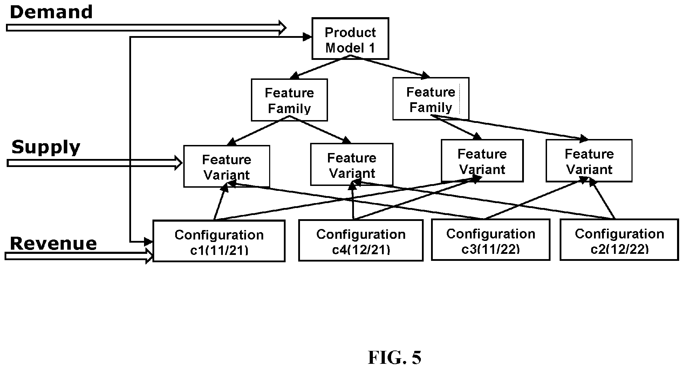

FIG. 5, with reference to FIGS. 1 through 4, depicts a product structure hierarchy illustrating a product family having one or more product models, in accordance with an embodiment of the present disclosure. For instance, as described above, a product family (e.g., say product family 1) may comprise one or more product models (e.g., product model 1, product model 2, and so on). Each product model comprises one or more feature families (e.g., say feature family 1, feature family 2, and so on.) Each feature family comprises one or more feature variants (e.g., say feature family 1 comprises a feature variant 11, feature variant 12, and the like, and feature family 2 comprises a feature variant 21, feature variant 22, and the like). The product family additionally may include one or more configurations (e.g., say configuration c1 (11/21), configuration c4 (12/21), configuration c3 (11/22), configuration c4 (12/22), and so on.). In other words, product family may comprise one or more product models, wherein each product model consists of feature families, which in turn consist of feature variants. Different combinations of feature variants are used to build various configurations. The feature variants can be shared between product models, and each manufacturer may have several such product families.

At step 204 of the method of the present disclosure, the one or more hardware processors 104 generate one or more configurations for each of the one or more product models, from (i) the plurality of feature variants, (ii) one or more supply constraints, and (iii) one or more usage policies, wherein each of the one or more configurations pertains to a unique bundle of the plurality of feature variants. Usage policy for a Feature variant can suggest upper and lower bounds (maximum or minimum respectively) on the proportion of the specific product model (or the whole product family or overall, i.e., all product families together) volume having that feature variant. For example, usage policy for the feature variant Sunroof (FV12) in the Product Model 1 as referred in Table 1, can have the proportion of its volume containing the Sunroof (FV12) bounded below by 20% and above by 60%. Another example usage policy on Wheel Steel (FV22) on the product Model 1 can have the proportion of the volume containing the Wheel Steel (FV22) bounded below by 0% and above by 80%. Two or more combinations of the plurality of feature variants are used to build the one or more configurations, in one example embodiment of the present disclosure. Below Table 1 depicts illustrative examples of configurations generated for the one or more product models (e.g., say product model 1) by the system.

**Table 1**

| Product Model 1 | | | | | | |
|---|---|---|---|---|---|---|
| Demand | 1000 | | | | | |
| | | Configurations | | | | |
| Feature Family | Feature Variant | c1 | c2 | c3 | c4 | Supply limit |
| Sunroof | None (FV11) | 1 | 0 | 1 | 0 | 100,000 |
| Sunroof | Single (FV12) | 0 | 1 | 0 | 1 | 800 |
| Wheels | Alum (FV21) | 1 | 0 | 0 | 1 | 450 |
| Wheels | Steel (FV22) | 0 | 1 | 1 | 0 | 650 |

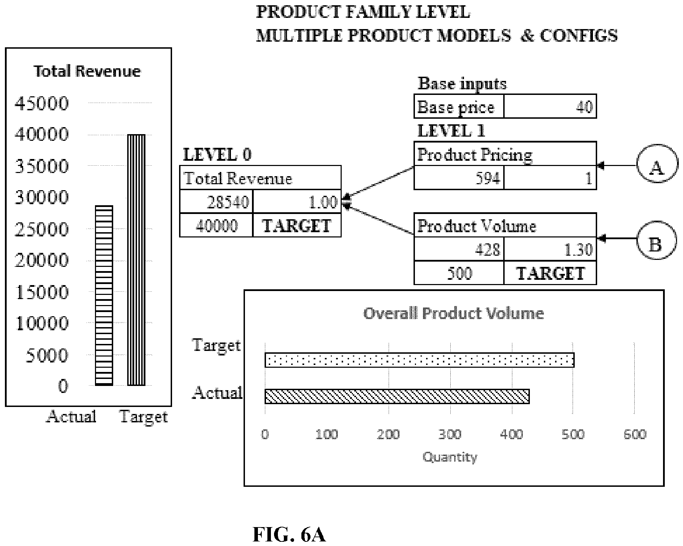

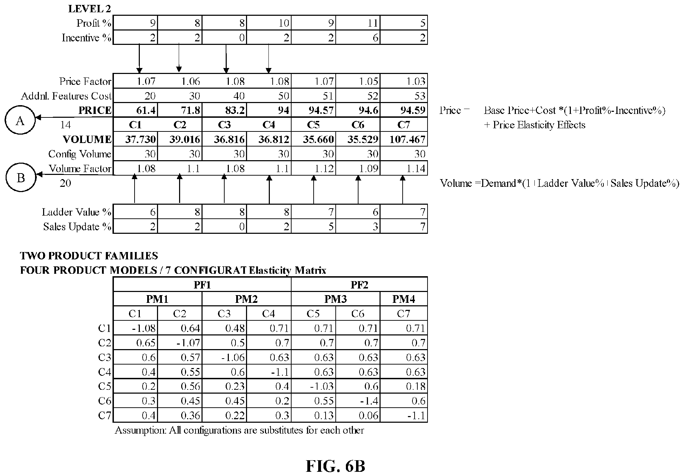

The Product Revenue Drivers Analyzer consists of an interactive interface (not shown in FIGS.), through which the driver values may be modified (e.g., say by end user) to assess and understand their impact on product revenue. FIG. 6A and FIG. 6B, with reference to FIGS. 1 through 5, shows an example driver model at the product family level as implemented by the system 100 of FIGS. 1-2, in accordance with an embodiment of the present disclosure. Here product revenue (Level 0) is driven by product pricing and product volume (Level 1 drivers). Product pricing in turn is driven by profit%, incentive%, feature affinity% and X price factor %. (Level 2 drivers), with each driver having either a positive or negative contribution to the price factor. Similarly, product volume is driven by ladder value%, sales update%, brand value% and competitive space% (Level 2 drivers), which have positive or negative contributions to volume factor. The Level 2 drivers may be manipulated by the user by entering different % values, which are used by the system to determine the price factor and the volume factor, and subsequently determine the price and volume for each configuration. Next, the system 100 cascades these changes downstream to reflect the impact on product model revenue. The user may also setup a target for the product model revenue and/or product volume and manipulate the corresponding factor values to determine the % change needed at an aggregate level for the targets to be reached. This information may then be used to guide the changes in the Level 2 drivers needed to achieve the target, thereby enabling guided decisions.

This Revenue Driver Model provides guidance to users on the impact of Level 1 and Level 2 driving factors on Total Revenue. Level 2 drivers are most granular, and user can change these values in various markers (e.g., color coding say blue cells, or pattern filling say lines depicting in horizontal/vertical, and the like). Product volume (Level 1 Driver) can be modified using the factor value in the various markers (e.g., color coding say green cells, or pattern filling say lines depicting in horizontal/vertical, and the like). This can be used to determine the % change needed to achieve a Target Volume (ex. supply capacity). Similarly, revenue factor value can be changed in various markers (e.g., color coding say orange/amber cells, or pattern filling say lines depicting in horizontal/vertical, and the like) to determine the % change needed to achieve a Target Revenue. Level 1 and 2 drivers can be modified to reach these % changes.

At step 206 of the method of the present disclosure, the one or more hardware processors 104 extract a historical sales data pertaining to the one or more configurations of each of the one or more product models. The historical sales data is stored in the database 108 of the system 100, in an example embodiment. The historical sales data of various configurations are used to predict demand in future periods. Below Table 2 depicts illustrative examples of historical sales data pertaining to the one or more configurations of each of the one or more product models.

**Table 2**

| **Configuration ID** | **c1** | **c2** | **c3** | **c4** |
|---|---|---|---|---|
| **Configuration Volume** | 50 | 50 | 50 | 50 |
| **Q1-2020** | 55 | 29 | 44 | 55 |
| **Q2-2020** | 50 | 49 | 69 | 45 |
| **Q3-2020** | 77 | 67 | 33 | 27 |
| **Q4-2020** | 51 | 75 | 73 | 68 |
| **Q1-2021** | 59 | 64 | 58 | 47 |
| **Q2-2021** | 62 | 69 | 55 | 47 |
| **Q3-2021** | 58 | 69 | 62 | 54 |
| **Q4-2021** | 60 | 67 | 59 | 49 |

In the above Table 2, configurations data pertaining to Q1-2020, Q2-2020, Q3-2020, and Q4-2020 are historical sales data.

At step 208 of the method of the present disclosure, the one or more hardware processors 104 predict a best-selling product configuration mix from the one or more configurations, across the one or more product models and a plurality of feature families based on the historical sales data, The best-selling configuration mix comprises a plurality of product-feature variant bundles, in one example embodiment. Considering each configuration as a unique bundle of features, the system 100 predicts the best-selling configurations mix, across all product models and product families. The prediction may be carried out using one among a suite of forecasting methods. The 3-Period Moving Average method may be used. The configurations data pertaining to Q1-2020, Q2-2020, Q3-2020, and Q4-2020 contain the historical sales volumes for configurations c1-c4 in Table 2, and the remaining cells show the computed forecasts for future periods.

**Table 2**

| **Configuration ID** | **c1** | **c2** | **c3** | **c4** |
|---|---|---|---|---|
| **Configuration Volume** | 50 | 50 | 50 | 50 |
| **Q1-2020** | 55 | 29 | 44 | 55 |
| **Q2-2020** | 50 | 49 | 69 | 45 |
| **Q3-2020** | 77 | 67 | 33 | 27 |
| **Q4-2020** | 51 | 75 | 73 | 68 |
| **Q1-2021** | 59 | 64 | 58 | 47 |
| **Q2-2021** | 62 | 69 | 55 | 47 |
| **Q3-2021** | 58 | 69 | 62 | 54 |
| **Q4-2021** | 60 | 67 | 59 | 49 |

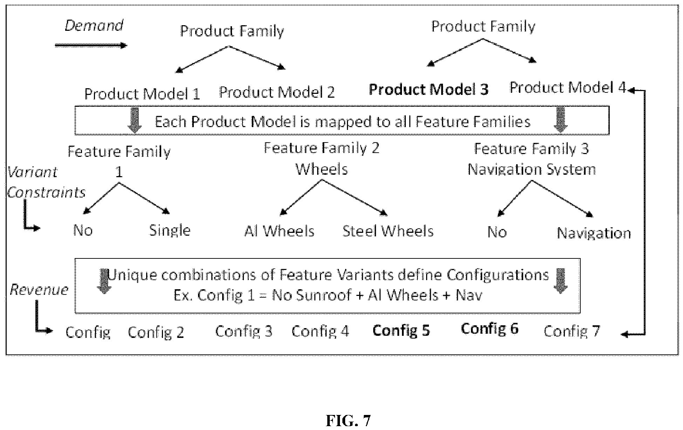

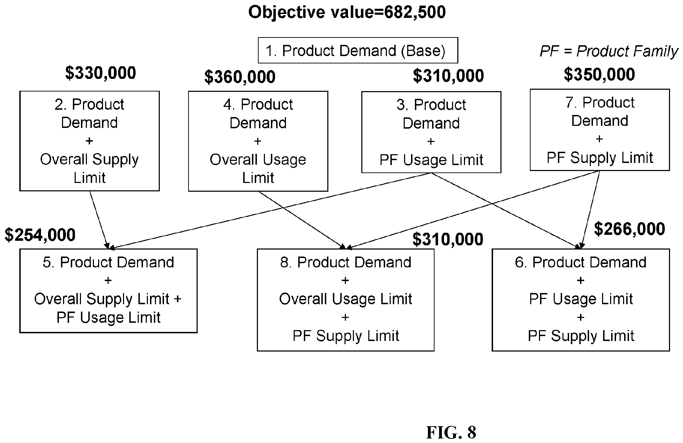

At step 210 of the method of the present disclosure, the one or more hardware processors 104 create one or more scenarios for the best-selling product configuration mix, through a configurator interface comprising of a plurality of options. The plurality of options comprises a scenario objective, one or more scenario dimensions, one or more scenario levels, and so on. The step of creating the one or more scenarios includes selecting a scenario objective from a predefined scenario objective list. Next, one or more scenario dimensions are selected from a predefined scenario dimensions list. New dimensions may also be defined either by user(s) or the system 100 - possibly arising from an improved understanding of the drivers. Further, one or more scenario levels are selected from a predefined scenario levels list. Each of the one or more scenario dimensions comprises the one or more scenario levels. In other words, each scenario dimension may have one or more levels, which require analysis. For example, usage dimension may have a maximum and a minimum level. These levels are added to a user interface (not shown in FIGS.) of the system 100 when a dimension is selected. Finally, the one or more scenarios are created based on one or more combinations of the one or more scenario levels. One or more scenarios may be configured/created by selecting different combinations of dimension-levels. Further, any or each user-selected combination may define a scenario. The user may choose to modify the auto-generated names of the scenarios, wherein the modified names/scenarios would be used in subsequent analysis. A couple of example scenarios could be, but not limited to maximum supply, minimum and maximum usage rate, where supply and usage rate are the dimensions and minimum and maximum are the scenario levels. FIG. 7, with reference to FIGS. 1 through 6B, depicts a configuration or creation of one or more scenarios by the systems 100 of FIGS. 1-2, in accordance with an embodiment of the present disclosure. Such creation/configuration of scenarios by the system 100 enables to systematically structure series of scenarios under constrained feature variant supply and usage, in one embodiment of the present disclosure. More specifically, FIG. 7 shows an exemplary presentation of a complex product hierarchy used in setting up the problem of product revenue optimization. The top level comprehends the bound on total product volume that is coming from individual volume across product families (here 2 of them). Each of these product families consist of product models each of which is mapped to feature families that can be shared across all the product models (and their product families as such). Please note that each of the product families is further mapped into a set of feature variants (e.g., feature family of "Sunroofs" has 2 feature variants "No Sunroof" and "Single Sunroof', and feature family of "Wheels" has 2 feature variants "Aluminium Wheels" and "Steel Wheels"). Further a configuration of a product model is built by selecting exactly one feature variant from each of the feature families, (e.g., Configuration 1 of the product Model 1 is built by selecting feature variants "No Sunroof', "Aluminium Wheels" and "Navigation" from the respective feature families such as "Sunroofs", "Wheels" and "Navigation Systems".) Further here we consider 7 configurations -- configurations 1 and 2 belong to the product model 1, configurations 3 and 4 belong to the product model 2, configurations 5 and 6 belong to the product model 3, configuration 7 alone belongs to the product model 4. The further elements of the model are set up at a feature variant level across the configurations. FIG. 8, with reference to FIGS. 1 through 7, depicts a hierarchy of various linked scenarios by the systems 100 of FIGS. 1-2, in accordance with an embodiment of the present disclosure. Such hierarchy of linked scenarios enables the systems 100 to structure iterative runs for improving/accelerating revenue growth. Please note that in the hierarchy of scenarios here it is clearly observed that the scenario 1 with only product demand constraint is a Base scenario that sizes up the total revenue opportunity where no supply or usage constraints are applied in the optimization set up. What is certainly observed is that if even one of the 4 categories of overall or product family level supply or usage constraints is added, it can be noticed that optimal revenue significantly reduces. Further, it can be observed that for example, across the scenarios 5 and 6 with product demand and product family level usage constraints, product family level supply constraints in the scenario 6 will reduce the opportunity further than scenario 5 as the freedom of utilizing available supply by "more profitable configuration" may be limited due to product family level constraints.

At step 212 of the method of the present disclosure, the one or more hardware processors 104 obtain one or more datasets pertaining to each of the one or more scenarios. In an embodiment, the user may create datasets as dictated by each of the configured scenarios, or the system 100 may create the one or more datasets (via one or more user inputs or based on historical pattern). The one or more datasets are created for each scenario configuration using (i) the plurality of product-feature variant bundles of the best-selling product configuration mix, (ii) one or more supply constraints, and (iii) the one or more usage policies. The one or more datasets created for each scenario comprises one or more lane-costs, the one or more supply constraints, and the one or more usage policies.

Using the forecasted demand from the feature bundler, along with other data from the product revenue driver analyzer, such as supply and usage limits, the one or more datasets created as dictated by each of the configured/created scenarios. Below Table 3 depicts the lane-costs by way of illustrative examples which includes objective variables and coefficients with related attributes:

**Table 3**

| **Variable** | **Source** | **Destination** | **Entity** | **Coefficient** | **Category** |
|---|---|---|---|---|---|
| x1 | PM1 | Plant1 | C1 | 70 | PF1 |
| x2 | PM1 | Plant1 | C2 | 65 | PF1 |
| x3 | PM1 | Plant1 | C3 | 100 | PF1 |
| x4 | PM1 | Plant1 | C4 | 25 | PF1 |
| x5 | PM1 | Plant2 | C1 | 50 | PF1 |

In the above Table 3, Source represents the product model, Destination represents the plant, and Entity represents a specific configuration. The product family is reflected in the Category column. The decision variables for optimization are the supply quantities for each Source-Destination-Entity combination, with the Coefficient representing the unit revenue used in defining the objective function as described below. In other words, the one or more lane-costs comprise a source representing the one or more product models, a destination representing an entity representing the one or more configurations, a category representing a product family, one or more decision variables for optimization of number of product variants to be built representing supply quantities for each source-destination-entity combination, and a coefficient representing a unit reserve used in defining an objective function. Below Table 4 depicts the one or more supply constraints by way of illustrative examples:

**Table 4**

| **c1** | **c2** | **c3** | **c4** | **relation** | **value** |
|---|---|---|---|---|---|
| 1 | 1 | 1 | 1 | <= | 1000 |
| 1 | 0 | 1 | 0 | <= | 10000 |
| 0 | 1 | 0 | 1 | <= | 500 |
| 1 | 0 | 0 | 1 | <= | 600 |

For an optimization problem with N decision variables and M supply constraints, the above supply constraints Table 3 has N+2 columns, and M rows, where each row represents a supply constraint, the first N columns contain the corresponding constraint coefficients, the (N+1)^{th} column has the constraint relation and the last column has the constraint value, for instance, demand or supply limit.

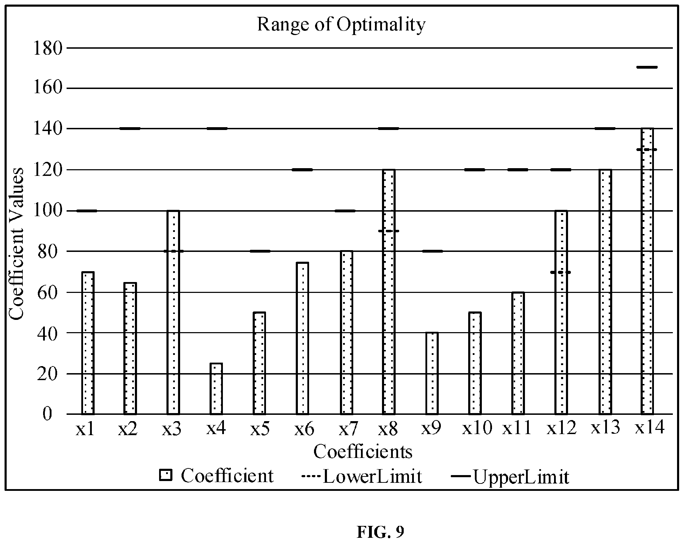

At step 214 of the method of the present disclosure, the one or more hardware processors 104 optimize, by using the one or more created datasets, the one or more scenarios selected based on a selected business scenario type by using an objective function and generate a plurality of optimization values. In an embodiment, the plurality of optimization values comprises an optimal value, a range of optimality, and a shadow price, for the selected business scenario type. FIG. 9, with reference to FIGS. 1 through 8, depicts a graphical representation illustrating a sensitivity chart output by the system 100 of FIGS. 1-2, in accordance with an embodiment of the present disclosure. This is an additional output from scenario optimizer implemented by the system 100 which has two parts for each scenario. Firstly, Range of Optimality (ROO): For the optimum solution (values of decision variables), the objective function coefficients have a particular range for which the optimum solution remains valid, assuming only that coefficient is varied. This may also be shown graphically via a secondary interface (refer FIG. 7). Secondly, Shadow Price (SP): For each binding constraint (constraint with zero slack), the shadow price is given by the increase in the objective function value for a unit increment of the RHS of the constraint.

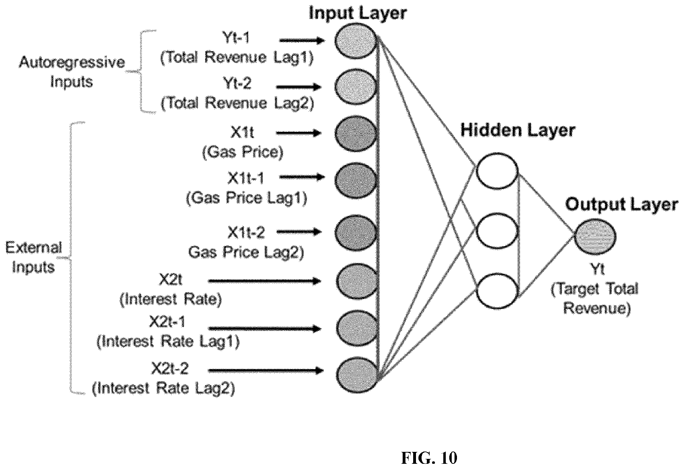

At step 216 of the method of the present disclosure, the one or more hardware processors 104 estimate, by using an autoregressive neural network model, a final target value for the one or more product models based on a first set of inputs and a second set of inputs. The first set of inputs comprise a historic target value pertaining to the one or more scenarios of the plurality of product models. Similarly, the second set of inputs comprises at least one of a price, and an interest rate associated with one or more products. FIG. 10, with reference to FIGS. 1 through 9, depicts an architecture of the autoregressive neural network model (NNARX) illustrating a method for estimating the final target value for the one or more product models, in accordance with an embodiment of the present disclosure. As can be seen from FIG. 9, a key input for achieving best results from the system 100 is a target total revenue (also referred as `final target value' and interchangeably used herein). This target total revenue may be estimated with predictive machine learning using the autoregressive neural network model as shown in FIG. 9. The autoregressive neural network model has 3 layers. The input layer may consist of 8 nodes, two of which may be the value of the target variable from the past two periods (e.g., the first set of inputs), and the other six may be external inputs (e.g., the second set of inputs such as gas price and interest rates) for the current and past two periods. The hidden layer may have 3 nodes and the output layer may have one node for the target variable in a future period, with the nodal weights calculated using a rectified linear activation function as known in the art. The estimated value of this output node may be used in the scenario accelerator described herein.

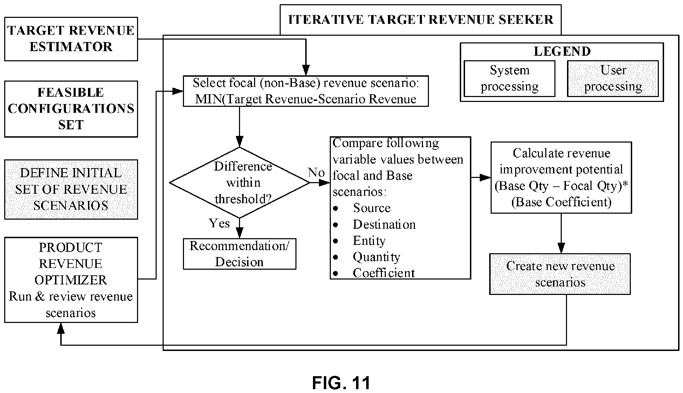

At step 218 of the method of the present disclosure, the one or more hardware processors 104 select at least one scenario amongst the one or more scenarios as a focal scenario based on a comparison between an associated scenario objective value and the final target value. FIG. 11, with reference to FIGS. 1 through 10, depicts a flow diagram of an iterative target revenue seeker as implemented by the system 100 of FIGS. 1-2 for selecting the at least one scenario as the focal scenario amongst the one or more scenarios, in accordance with an embodiment of the present disclosure. More specifically, in FIG. 11, the output total revenue from each scenario may be compared to the target and the scenario with the least deviation may be selected as the focal scenario. If the deviation is within a predefined tolerance, the focal scenario may be recommended to the user or team of users for further decisions or actions. In other words, when a difference between the associated scenario objective value and the final target value is within a predefined tolerance, the focal scenario is recommended to enable one or more actions. If the deviation exceeds the predefined tolerance, the planned quantities from the focal scenario may be compared to the corresponding quantities from the base scenario to identify deviations from ideal, and the differences in quantity and unit revenue between the two scenarios may be used as guidance for further input modifications. This process can also include modifying the constraints to increase the total revenue of the focal scenario. This process may be repeated iteratively, till the total revenue deviation from target is within tolerance. In other words, when the difference between the associated scenario objective value and the final target value is exceeding a predefined tolerance, one or more deviations identified by comparing one or more selected plurality of options, and one or more constraints of the focal scenario with the plurality of options, and the constraints of a base scenario, and the one or more constraints of the focal scenario are iteratively modified, to improve the associated scenario objective value, till the one or more deviations of the associated scenario objective value in comparison to the estimated final target value is within the predefined tolerance. For instance, source, destination, entity, quantity, coefficients of the focal scenario and the base scenario are compared and modified iteratively to improve the associated scenario objective value. The pre-defined tolerance refers to an acceptable range with reference to the final target revenue value, typically around 10% of the target value. Total revenue for the Base scenario generally is slightly higher than the target revenue, since it comprises an ideal scenario that is used to provide a reference point. One of the initial scenarios (other than Base) may be selected for recommendation or further refinement. This selection is rule-driven, where the rule may comprise "Select the scenario with the least total revenue difference with respect to the target revenue." The selected scenario is usually called the focal scenario. If the focal scenario's total revenue is more than the target revenue, no further refinement may be needed. The system 100 may recommend this as the preferred scenario to the decision makers. If the focal scenario's total revenue is less than the target revenue and the pre-defined tolerance (e.g., say less than 90% of the target revenue value where the predefined tolerance is 10%), further refinement may be needed. This process may be repeated till the target revenue is reached or the maximum number of iterations are run.

Current revenue optimization solutions are fragmented, solving individual pieces of the problem, such as forecasting, optimization, etc. separately. So, the users have to use these products in disjointed, serial fashion, which requires excess time and effort. Also, there is a shortage of revenue optimization methods focused on configurable products. The components of the system 100 as described herein, when used in combination provides an end-to-end product revenue optimization solution that reduces the time and effort for revenue drivers analysis, revenue scenarios configuration, optimization, analysis, and re-optimization. When implemented as a generalized digital solution, embodiments of the present disclosure may provide the user with a semi-automated solution for guided decision-making.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method, comprising:
receiving, via one or more hardware processors, a product family comprising one or more of product models, from a user, wherein each product model amongst the one or more product models comprises a plurality of feature families, wherein each feature family amongst the plurality of feature families comprises a plurality of feature variants (202);
generating, via the one or more hardware processors, one or more configurations for each of the one or more product models, from (i) the plurality of feature variants, (ii) one or more supply constraints, and (iii) one or more usage policies, wherein each of the one or more configurations pertains to a unique bundle of the plurality of feature variants (204);
extracting, via the one or more hardware processors, a historical sales data pertaining to the one or more configurations of each of the one or more product models (206);
predicting, by using one or more forecasting models via the one or more hardware processors, a best-selling product configuration mix from the one or more configurations, across the one or more product models and a plurality of feature families based on the historical sales data, wherein the best-selling configuration mix comprises a plurality of product-feature variant bundles (208);
creating, via the one or more hardware processors, one or more scenarios for the best-selling product configuration mix, through a configurator interface comprising of a plurality of options, wherein the plurality of options comprises a scenario objective, one or more scenario dimensions, and one or more scenario levels (210);
obtaining, via the one or more hardware processors, one or more datasets pertaining to each of the one or more scenarios, wherein the one or more datasets are created for each scenario configuration, using (i) the plurality of product-feature variant bundles of the best-selling product configuration mix, (ii) one or more supply constraints, and (iii) the one or more usage policies, and wherein the one or more datasets created for each scenario comprises one or more lane-costs, the one or more supply constraints, and the one or more usage policies (212);
optimizing, by using the one or more created datasets via the one or more hardware processors, the one or more scenarios selected based on a selected business scenario type by using an objective function, and generating a plurality of optimization values, wherein the plurality of optimization values comprises an optimal value, a range of optimality, and a shadow price, for the selected business scenario type (214);
estimating, by using an autoregressive neural network model via the one or more hardware processors, a final target value for the one or more product models based on a first set of inputs and a second set of inputs, wherein the first set of inputs comprise a historic target value pertaining to the one or more scenarios of the plurality of product models, and wherein the second set of inputs comprises at least one of a price, and an interest rate associated with one or more products (216); and
selecting, via the one or more hardware processors, at least one scenario amongst the one or more scenarios as a focal scenario, based on a comparison between an associated scenario objective value and the final target value (218).

2. The processor implemented method as claimed in claim 1, wherein two or more combinations of the plurality of feature variants are used to build the one or more configurations.

3. The processor implemented method as claimed in claim 1, wherein the step of creating the one or more scenarios comprises:
selecting a scenario objective from a predefined scenario objective list;
selecting one or more scenario dimensions from a predefined scenario dimensions list;
selecting one or more scenario levels from a predefined scenario levels list, wherein each of the one or more scenario dimensions comprises the one or more scenario levels; and
creating the one or more scenarios based on one or more combinations of the one or more scenario levels.

4. The processor implemented method as claimed in claim 1, wherein the one or more lane-costs comprise a source representing the one or more product models, a destination representing an entity representing the one or more configurations, a category representing a product family, one or more decision variables for optimization of number of product variants to be built representing supply quantities for each source-destination-entity combination, and a coefficient representing a unit reserve used in defining an objective function.

5. The processor implemented method as claimed in claim 1, wherein when a difference between the associated scenario objective value and the final target value is within a predefined tolerance, the focal scenario is recommended to enable one or more actions.

6. The processor implemented method as claimed in claim 1, wherein when a difference between the associated scenario objective value and the final target value is exceeding a predefined tolerance, the method comprises:
identifying one or more deviations, by comparing one or more selected plurality of options and one or more constraints of the focal scenario with the plurality of options and the constraints of a base scenario; and
iteratively modifying the one or more constraints of the focal scenario, to improve the associated scenario objective value, till the one or more deviations of the associated scenario objective value in comparison to the estimated final target value is within the predefined tolerance.

7. A system (100), comprising:
a memory (102) storing instructions;
one or more communication interfaces (106); and
one or more hardware processors (104) coupled to the memory (102) via the one or more communication interfaces (106), wherein the one or more hardware processors (104) are configured by the instructions to:
receive a product family comprising one or more of product models, from a user, wherein each product model amongst the one or more product models comprises a plurality of feature families, wherein each feature family amongst the plurality of feature families comprises a plurality of feature variants;
generate one or more configurations for each of the one or more product models, from (i) the plurality of feature variants, (ii) one or more supply constraints, and (iii) one or more usage policies, wherein each of the one or more configurations pertains to a unique bundle of the plurality of feature variants;
extract a historical sales data pertaining to the one or more configurations of each of the one or more product models;
predict, by using one or more forecasting models, a best-selling product configuration mix from the one or more configurations, across the one or more product models and a plurality of feature families based on the historical sales data, wherein the best-selling configuration mix comprises a plurality of product-feature variant bundles;
create one or more scenarios for the best-selling product configuration mix, through a configurator interface comprising of a plurality of options, wherein the plurality of options comprises a scenario objective, one or more scenario dimensions, and one or more scenario levels;
obtain one or more datasets pertaining to each of the one or more scenarios, wherein the one or more datasets are created using for each scenario configuration, using (i) the plurality of product-feature variant bundles of the best-selling product configuration mix, (ii) one or more supply constraints, and (iii) the one or more usage policies, and wherein the one or more datasets created for each scenario comprises one or more lane-costs, the one or more supply constraints, and the one or more usage policies;
optimize, by using the one or more created datasets, the one or more scenarios selected based on a selected business scenario type by using an objective function, and generating a plurality of optimization values, wherein the plurality of optimization values comprises an optimal value, a range of optimality, and a shadow price, for the selected business scenario type;
estimate, by using an autoregressive neural network model, a final target value for the one or more product models based on a first set of inputs and a second set of inputs, wherein the first set of inputs comprise a historic target value pertaining to the one or more scenarios of the plurality of product models, and wherein the second set of inputs comprises at least one of a price, and an interest rate associated with one or more products; and
select at least one scenario amongst the one or more scenarios as a focal scenario based on a comparison between an associated scenario objective value and the final target value.

8. The system as claimed in claim 7, wherein two or more combinations of the plurality of feature variants are used to build the one or more configurations.

9. The system as claimed in claim 7, wherein the one or more scenarios are created by:
selecting a scenario objective from a predefined scenario objective list;
selecting one or more scenario dimensions from a predefined scenario dimensions list;
selecting one or more scenario levels from a predefined scenario levels list, wherein each of the one or more scenario dimensions comprises the one or more scenario levels; and
creating the one or more scenarios based on one or more combinations of the one or more scenario levels.

10. The system as claimed in claim 7, wherein the one or more lane-costs comprise a source representing the one or more product models, a destination representing an entity representing the one or more configurations, a category representing a product family, one or more decision variables for optimization of number of product variants to be built representing supply quantities for each source-destination-entity combination, and a coefficient representing a unit reserve used in defining an objective function.

11. The system as claimed in claim 7, wherein when a difference between the associated scenario objective value and the final target value is within a predefined tolerance, the focal scenario is recommended to enable one or more actions.

12. The system as claimed in claim 7, wherein when a difference between the associated scenario objective value and the final target value is exceeding a predefined tolerance, the one or more hardware processors are further configured by the instructions to:
identify one or more deviations, by comparing one or more selected plurality of options and one or more constraints of the focal scenario with the plurality of options and the constraints of a base scenario; and
iteratively modify the one or more constraints of the focal scenario, to improve the associated scenario objective value, till the one or more deviations of the associated scenario objective value in comparison to the estimated final target value is within the predefined tolerance.

13. One or more non-transitory machine-readable information storage mediums comprising one or more instructions which when executed by one or more hardware processors cause:
receiving a product family comprising one or more of product models, from a user, wherein each product model amongst the one or more product models comprises a plurality of feature families, wherein each feature family amongst the plurality of feature families comprises a plurality of feature variants;
generating one or more configurations for each of the one or more product models, from (i) the plurality of feature variants, (ii) one or more supply constraints, and (iii) one or more usage policies, wherein each of the one or more configurations pertains to a unique bundle of the plurality of feature variants;
extracting a historical sales data pertaining to the one or more configurations of each of the one or more product models;
predicting, by using one or more forecasting models, a best-selling product configuration mix from the one or more configurations, across the one or more product models and a plurality of feature families based on the historical sales data, wherein the best-selling configuration mix comprises a plurality of product-feature variant bundles;
creating one or more scenarios for the best-selling product configuration mix, through a configurator interface comprising of a plurality of options, wherein the plurality of options comprises a scenario objective, one or more scenario dimensions, and one or more scenario levels;
obtaining one or more datasets pertaining to each of the one or more scenarios, wherein the one or more datasets are created for each scenario configuration, using (i) the plurality of product-feature variant bundles of the best-selling product configuration mix, (ii) one or more supply constraints, and (iii) the one or more usage policies, and wherein the one or more datasets created for each scenario comprises one or more lane-costs, the one or more supply constraints, and the one or more usage policies;
optimizing, by using the one or more created datasets, the one or more scenarios selected based on a selected business scenario type by using an objective function, and generating a plurality of optimization values, wherein the plurality of optimization values comprises an optimal value, a range of optimality, and a shadow price, for the selected business scenario type;
estimating, by using an autoregressive neural network model, a final target value for the one or more product models based on a first set of inputs and a second set of inputs, wherein the first set of inputs comprise a historic target value pertaining to the one or more scenarios of the plurality of product models, and wherein the second set of inputs comprises at least one of a price, and an interest rate associated with one or more products; and
selecting at least one scenario amongst the one or more scenarios as a focal scenario, based on a comparison between an associated scenario objective value and the final target value.

14. The one or more non-transitory machine-readable information storage mediums as claimed in claim 13, wherein two or more combinations of the plurality of feature variants are used to build the one or more configurations.

15. The one or more non-transitory machine-readable information storage mediums as claimed in claim 13, wherein the step of creating the one or more scenarios comprises:
selecting a scenario objective from a predefined scenario objective list;
selecting one or more scenario dimensions from a predefined scenario dimensions list;
selecting one or more scenario levels from a predefined scenario levels list, wherein each of the one or more scenario dimensions comprises the one or more scenario levels; and
creating the one or more scenarios based on one or more combinations of the one or more scenario levels,
wherein the one or more lane-costs comprise a source representing the one or more product models, a destination representing an entity representing the one or more configurations, a category representing a product family, one or more decision variables for optimization of number of product variants to be built representing supply quantities for each source-destination-entity combination, and a coefficient representing a unit reserve used in defining an objective function,
wherein when a difference between the associated scenario objective value and the final target value is within a predefined tolerance, the focal scenario is recommended to enable one or more actions, and
wherein when a difference between the associated scenario objective value and the final target value is exceeding a predefined tolerance, the one or more instructions which when executed by the one or more hardware processors further cause:
identifying one or more deviations, by comparing one or more selected plurality of options and one or more constraints of the focal scenario with the plurality of options and the constraints of a base scenario; and
iteratively modifying the one or more constraints of the focal scenario, to improve the associated scenario objective value, till the one or more deviations of the associated scenario objective value in comparison to the estimated final target value is within the predefined tolerance.
